# FASCICULE DE BREVET EUROPEEN

(11) **EP 2 437 937 B1**
(45) Date de publication et mention de la délivrance du brevet: **20.03.2013**
(21) Numéro de dépôt: 10734200.8
(22) Date de dépôt: 01.06.2010
(51) Int. Cl.: B32B 17/10, G02B 27/01, C09D 11/02, C09K 11/06, C08K 5/00, C09D 11/00, C08K 5/134

(54) **VITRAGE FEUILLETE POUR SYSTEME DE VISUALISATION TETE HAUTE**
VERBUNDVERGLASUNG FÜR HEAD-UP ANZEIGESYSTEM
LAMINATED GLAZING FOR HEAD-UP DISPLAY SYSTEM

(30) Priorité: 03.06.2009 FR 0953662
(43) Date de publication de la demande: 11.04.2012
(73) Titulaire: Saint-Gobain Glass France, 92400 Courbevoie (FR)
(72) Inventeur: LABROT, Michael, 52072 Aachen (DE); BRENIAUX, Marie-Hélène, F-68260 Kingersheim (FR); SABLAYROLLES, Jean, F-60530 Crouy en Thelle (FR)
(74) Mandataire: Lucas, Francois
(86) Numéro de dépôt international: PCT/FR2010/051059
(87) Numéro de publication internationale: WO 2010/139889

(56) Documents cités:
- WO-A2-2008/132368
- DE-A1- 4 024 330
- GB-A- 844 540
- US-A1- 2004 016 938
- US-A1- 2005 123 243
- M. DAY, D.M. WILES: "Photochemical Degradation of Poly(ethylene Terephthalate). I Irradiation Experiments with the Xenon and Carbon Arc" JOURNAL OF APPLIED POLYMER SCIENCE, vol. 16 (1972), 31 décembre 1972 (1972-12-31), pages 175-189, XP002565384

## Description

La présente invention se rapporte au domaine des systèmes de visualisation projetés sur des écrans du type transparent, en particulier les pare-brises automobile ou les vitrages pour bâtiment.

Tout particulièrement, même si elle n'y est pas limitée, la présente invention se rapporte au domaine des systèmes de visualisation dits tête haute, appelés HUD ou Head Up Display dans la technique. De tels systèmes sont utiles notamment dans les cockpits d'avion, les trains mais également aujourd'hui dans les véhicules automobiles des particuliers (voitures, camions, etc.).

Dans de tels systèmes, le vitrage est en général constitué d'une structure en sandwich, comprenant le plus simplement deux feuilles de matière résistante telles que des feuilles de verre. Les feuilles de matière résistante sont reliées entre elles par un feuillet intercalaire thermoformable comprenant ou constitué par le plus souvent du polyvinylbutyral (PVB).

De tels systèmes de visualisation tête haute, qui permettent d'afficher des informations projetées sur un vitrage qui se réfléchissent vers le conducteur ou l'observateur sont déjà connus. Ces systèmes permettent notamment d'informer le conducteur du véhicule sans que celui-ci éloigne son regard du champ de vision en avant du véhicule, ce qui permet d'accroître grandement la sécurité. Le conducteur perçoit une image virtuelle qui se situe à une certaine distance derrière le pare-brise.

De la manière la plus classique, on obtient une telle image en projetant une information sur un pare-brise ayant une structure feuilletée, c'est à dire formée de deux feuilles de verre et d'un intercalaire en matière plastique. Cependant le conducteur observe alors une image double: une première image réfléchie par la surface du pare-brise orientée vers l'intérieur de l'habitable et une seconde image par réflexion de la surface extérieure du pare-brise, ces deux images étant légèrement décalées l'une par rapport à l'autre. Ce décalage peut perturber la vision de l'information. Pour pallier ce problème, on peut citer la solution proposée dans le brevet US 5,013,134, dans lequel est décrit un système de visualisation tête haute utilisant un pare-brise feuilleté formé de deux feuilles de verre et d'un intercalaire en polyvinylbutyral (PVB) dont les deux faces extérieures ne sont pas parallèles mais en forme de coin, de sorte que l'image projetée par une source d'affichage et réfléchie par la face du pare-brise orientée vers l'habitacle soit pratiquement superposée à la même image provenant de la même source réfléchie par la face du pare-brise orientée vers l'extérieur. Pour supprimer l'image double, on réalise classiquement un vitrage feuilleté en forme de coin en utilisant une feuille intercalaire dont l'épaisseur décroît du bord supérieur du vitrage au bord inférieur. Cependant, il est nécessaire que le profil du PVB soit très régulier et ne présente pas de variations d'épaisseur, car ceux-ci se transmettent au cours de l'assemblage sur le pare-brise et conduisent à des variations locales d'angle.

Alternativement, il est proposé dans le brevet US 6,979,499 B2 d'envoyer un faisceau incident, de longueur d'onde appropriée, sur des luminophores directement intégrés dans le vitrage, susceptibles de répondre à l'excitation par l'émission d'une radiation lumineuse dans le domaine de la lumière visible. De cette façon, une image réelle et non plus virtuelle, est formée directement sur le pare-brise. Cette image est en outre visible par tous les passagers du véhicule. Le brevet US 6,979,499 B2 décrit en particulier un vitrage feuilleté avec un feuillet intercalaire du type polyvinylbutyral (PVB) dont les deux faces extérieures sont parallèles et dans lequel une couche de luminophores additionnelle est incorporée. Les luminophores sont choisis en fonction de la longueur d'onde du rayonnement d'excitation incident. Cette longueur d'onde peut être dans le domaine de l'ultraviolet ou de l'IR. Les luminophores, sous cette radiation incidente, réémettent un rayonnement dans le domaine du visible. On parle alors de down conversion lorsque le rayonnement incident est l'UV et d'up conversion lorsque le rayonnement incident est l'IR. Une telle construction permet selon ce document de restituer directement sur le pare-brise ou le vitrage une image de n'importe quel objet. Selon cette divulgation, des matériaux luminophores sont déposés sur l'ensemble d'une surface principale d'un des feuillets constituant le vitrage feuilleté (PVB ou verre) sous la forme d'une couche continue comprenant plusieurs types de luminophores. L'image recherchée est obtenue par l'excitation sélective d'une aire déterminée de la couche de luminophore. La localisation de l'image et sa forme sont obtenues au moyen d'une source d'excitation pilotée et modulée par des moyens extérieurs.

Cependant, les expériences menées par le demandeur ont montré que de tels dispositifs HUD, incorporant des luminophores dans le vitrage assemblé, se caractérisent par une luminance trop faible sous une source d'excitation UV conventionnellement non focalisée. De plus, la concentration des luminophores est limitée par la valeur de flou du pare-brise qui ne doit pas être trop élevée pour ne pas gêner la vision du conducteur.

En particulier, il apparaît que l'intensité lumineuse obtenue avec de tels dispositifs reste encore très insuffisante lorsque la luminosité extérieure est forte, et d'une manière générale en vision diurne, puisqu'elle ne dépasse pas quelques dizaines de candelas. Typiquement, on a mesuré sur un système du type «HUD » classique, c'est-à-dire fonctionnement selon les principes de la réflexion, qu'un rayonnement monochromatique était visible d'un observateur, par exemple au niveau de la zone de vision du conducteur d'un véhicule, si la luminance était de l'ordre de plusieurs centaines de cd/m², notamment notablement supérieure à 500 cd/m², voire 1000 cd/m², dans des conditions normales d'éclairage extérieur, de jour, du pare-brise.

Pour obtenir une telle luminance, il est possible d'utiliser des sources excitatrices générant une lumière UV concentrée et dirigée, délivrée par des sources plus spécifiques du type diode laser. Par concentré, il est entendu au sens de la présente description que la puissance surfacique, au niveau du vitrage, du faisceau issu de la source génératrice est supérieure à 120 mW.cm⁻² et de préférence comprise entre 200 mW.cm⁻² et 20 000 mW.cm⁻², voire comprise entre 500 mW.cm⁻² et 10 000 mW.cm⁻². Cependant, l'utilisation de telles sources ne peut être envisagée qu'à des puissances qui restent plafonnées, afin d'éviter les problèmes liés à la dangerosité du faisceau, notamment à l'extérieur du véhicule. En particulier, en travaillant avec une longueur d'onde inférieure à 410 nm, on peut éviter le passage de la majeure partie du rayonnement laser vers l'extérieur car à ces longueurs d'onde le PVB absorbe fortement le rayonnement UV.

Un autre problème primordial lié à l'utilisation des sources concentrées de lumière type laser tient au choix du luminophore utilisé : celui-ci doit présenter un rendement de conversion du rayonnement incident élevé mais ne doit pas se dégrader sous le rayonnement UV extérieur ni surtout sous le rayonnement UV concentré incident notamment du type laser, afin d'assurer à la fonction de visualisation une durée de vie convenable.

Dans un tel vitrage permettant la visualisation d'informations directement à sa surface, le choix du luminophore apparaît ainsi primordial et est nécessairement un compromis entre différentes caractéristiques et propriétés liées à une telle utilisation parmi lesquelles :
- une forte luminance assurée par un bon rendement quantique sous l'excitation UV incidente,
- une transparence telle que le flou (« haze ») ne soit pas supérieur à 2% et la transmission lumineuse supérieure à 70%,
- une compatibilité chimique avec le feuillet thermoplastique composant du vitrage,
- une coloration neutre, notamment lorsqu'il est présent en forte concentration dans le vitrage, telle que par exemple mesurée par le test dit « Yellowness Index » selon la norme DIN 6167,
- une durabilité maximale aux tests de vieillissement aux rayonnements UV solaires incidents, tels que notamment mesurés par le test Arizona ® dans le domaine,
- une durabilité maximale aux tests de vieillissement au rayonnement UV concentré incident, notamment laser, tels que notamment mesuré par le temps observé avant que la luminance initiale, mesurée en cd/m², soit réduite de moitié.

Plus précisément, la présente invention se rapporte à un vitrage feuilleté pour la visualisation d'informations du type pare-brise pour automobile ou vitrage pour bâtiment, comprenant un assemblage d'au moins deux feuilles transparentes de verre inorganique ou d'une matière organique résistante, reliées entre elles par un intercalaire d'une matière thermoformable ou par des feuillets multicouches incorporant un tel intercalaire, ledit vitrage étant caractérisé en qu'un matériau luminophore du type hydroxytéréphtalate est intégré dans ledit intercalaire, permettant ladite visualisation.

On entend par hydroxytéréphtalate un diester dérivé de l'acide téréphtalique répondant à la formule générale :

R-OOC-ΦD(OH)ₓ-COOR,

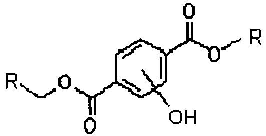

dans laquelle
- Φ désigne un noyau benzénique substitué par au moins un groupement hydroxy OH,
- R est une chaine hydrocarbonée comprenant de 1 à 10 atomes, de préférence de 1 à 5 atomes de carbone, en particulier de 1 ou 2 atomes de carbone, et
- x est égal à 1 ou 2.

De préférence, le groupement hydroxy est en position 2 et/ou en position 5 sur le cycle aromatique. En particulier, ledit luminophore peut-être un dialkyl 2-5 dihydroxytéréphtalate selon la formule développée :

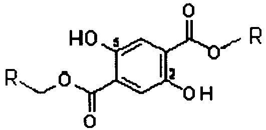

Par exemple, ledit luminophore peut être le diéthyl-2,5-dihydroxytéréphtalate (HO)₂C₆H₂(CO₂CH₂CH₃)₂, dont la longueur d'onde d'émission est proche des 450 nm :

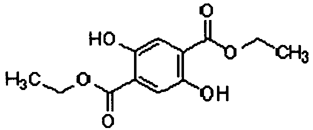

Typiquement dans le vitrage selon l'invention, le luminophore du type téréphtalate est solvaté dans ladite matière thermoplastique.

Par exemple la matière thermoformable constituant ledit intercalaire est choisie dans le groupe des PVB, des PVC plastifiés, du polyuréthane PU ou des éthylènes vinyle acétate EVA.

De préférence, la matière thermoformable est le PVB.

Selon un mode de réalisation possible, les feuilles transparentes sont reliées entre elles par un feuillet multicouche intégrant un intercalaire PVB, par exemple un feuillet comprenant une succession de couches PVB/PET/PVB, dans lequel PET est le polyéthylène téréphtalate.

L'invention se rapporte en outre à un procédé de fabrication d'un vitrage feuilleté selon l'une des réalisations précédentes, dans lequel on dépose la couche mince sur le feuillet thermoplastique du type PVB par une technique choisie parmi les techniques de sérigraphie, les techniques du type jet d'encre ou encore les techniques du type offset, flexogravure ou encore héliogravure, sous la forme d'une solution d'un alcool avec un liant du type PVB, puis on effectue le feuilletage du vitrage sous autoclave.

L'invention se rapporte enfin à un dispositif de visualisation d'une image sur un vitrage transparent, comprenant un vitrage feuilleté selon l'une des réalisations précédentes et une source génératrice de rayonnement UV concentré du type laser dont le rayonnement est compris entre 350 et 410 nm, le rayonnement UV étant dirigé vers la ou les zones du vitrage le luminophore du type téréphtalate.

Dans le dispositif de visualisation, la source génératrice de rayonnement UV comprend typiquement au-moins une diode laser émettant un rayonnement d'excitation UV dont la longueur d'onde est inférieure à 410 nm et de préférence est comprise entre 350 et 405 nm.

Par exemple, la puissance surfacique du faisceau issu de la source génératrice est supérieure à 120 mW.cm⁻² et de préférence comprise entre 200 mW.cm⁻² et 20 000 mW.cm⁻², voire comprise entre 500 mW.cm⁻² et 10 000 mW.cm⁻².

De préférence, le dispositif de visualisation comprend en outre des moyens de modulation de la puissance la source génératrice de rayonnement UV notamment afin d'adapter la luminance aux conditions d'éclairage extérieur du vitrage, par exemple en fonction des conditions d'ensoleillement du vitrage.

Par exemple les moyens de modulations peuvent définir au moins une puissance convenant pour une utilisation de jour et au moins une puissance, inférieure à la précédente et convenant pour une utilisation de nuit.

L'invention et ses avantages seront mieux compris à la lecture du mode de réalisation de l'invention qui suit, en relation avec la figure unique jointe.

La figure jointe permet d'illustrer l'invention et ses avantages :

Sur cette figure, on a schématisé un pare-brise et un dispositif selon l'invention :

Le pare-brise 1 se compose de deux feuilles 2 et 9 typiquement en verre mais qui pourraient également être constituées de feuillets de matière plastique résistante du type polycarbonate. Entre les deux feuillets, est présent un feuillet intercalaire plastique 3 tel que du PVB (polyvinylbutyral), du PVC plastifié, PU ou EVA ou bien encore un feuillet thermoplastique multicouche incorporant par exemple du PET (polyéthylène téréphtalate), dont la succession des couches est par exemple PVB/PET/PVB.

Sur au-moins une partie de la face interne du feuillet thermoplastique intercalaire 3 ont été déposées avant feuilletage, c'est-à-dire avant l'assemblage des différents feuillets, des particules de luminophore organique du type téréphtalate selon l'invention.

Les particules de luminophore présentent une répartition de taille majoritairement comprise entre 1 et 100 microns. Par majoritairement il est entendu que plus de 90% des particules composant la poudre commerciale ont un diamètre compris entre 1 et 100 microns. De manière préférée, les particules de luminophore du type téréphtalate subissent un traitement préalable favorisant leur imprégnation dans le feuillet thermoplastique de PVB. Plus précisément, les particules sont préalablement enrobées dans un liant à base de PVB.

Une source laser 4 émettent un rayonnement lumineux d'excitation est utilisée pour envoyer un rayonnement concentré incident 7 de longueur d'onde proche de 400 nm. Le luminophore du type téréphtalate 10, solvaté sous forme moléculaire dans le feuillet thermoplastique intercalaire 3, présente un fort coefficient d'absorption du rayonnement incident. Il réémet ensuite un rayonnement dans le domaine visible, c'est-à-dire un rayonnement proche de 450 nm avec un rendement supérieur à 80%.

Le rayonnement visible émis par le luminophore est alors directement observable par l'oeil 5 du conducteur, qui visualise ainsi l'objet sur le pare-brise sans avoir à quitter la route des yeux. De cette façon, une image peut être directement matérialisée sur un pare-brise feuilleté sans nécessiter d'adapter la structure de celui-ci, par exemple l'épaisseur du feuillet intercalaire, ce qui permet une fabrication économique des systèmes HUD.

La source utilisée pour générer le rayonnement concentré est par exemple une source UV du type source UV laser. Elle est par exemple mais non limitativement du type laser à solide, diode laser à semi-conducteurs, lasers à gaz, lasers à colorant, laser à excimère. De manière générale toute source connue générant un flux concentré et dirigé, au sens de la présente invention, d'un rayonnement UV peut être utilisée comme source d'excitation selon l'invention.

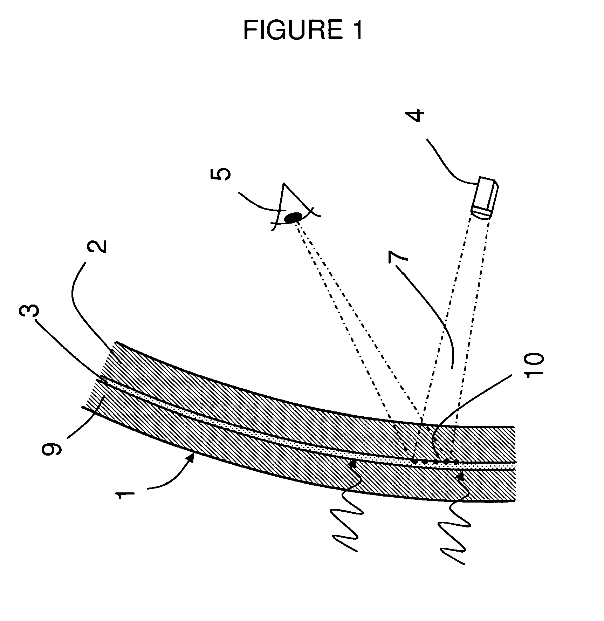

Selon un mode possible de réalisation, il est possible d'utiliser un projecteur DLP pour moduler l'onde excitatrice selon le mode décrit dans la demande US 2005/231652, paragraphe [0021]. Il est également possible selon l'invention d'utiliser comme source d'excitation UV un dispositif tel que décrit dans la demande US2004/0232826, notamment tel que décrit en connexion avec la figure 3.

Le dépôt du luminophore sur le feuillet PVB peut être réalisé par exemple par des techniques de sérigraphie, par des techniques du type jet d'encre ou encore par des techniques du type offset, flexogravure ou héliogravure.

De préférence, le dépôt par l'une des techniques précédentes est effectué par dissolution ou dispersion des particules de luminophores dans au-moins une matrice qui est choisie pour faciliter l'incorporation et la dissolution très rapide du luminophore dans le feuillet thermoplastique, notamment lors du passage en autoclave permettant l'assemblage du vitrage feuilleté. Des liants à base de PVB ou d'autres matières plastiques du type PMMA se sont montrés particulièrement performants pour une telle fonction.

Selon une des caractéristiques essentielles de l'invention, il est apparu que les luminophores 10 de la famille téréphtalate pouvaient ainsi être incorporés dans le feuillet plastique PVB de façon suffisamment intime pour que leur présence ne puisse plus être détectée par les techniques classiques de microscopie lumineuse. Sans que cela puisse être interprété comme une quelconque théorie, une explication possible serait que les molécules de téréphtalate sont entièrement solvatées dans le feuillet PVB après passage en autoclave, c'est-à-dire qu'elles s'y retrouvent au final sous forme de particules individualisées dans la matière plastique.

Certainement en raison de ce phénomène, il a été trouvé par le demandeur que dans le cadre d'une application de visualisation d'une image au travers d'un vitrage transparent, l'utilisation de luminophores du type téréphtalate permet de répondre efficacement aux impératifs suivants, nécessaires à une telle application :
a) une netteté de l'image acceptable,
b) une intensité de luminescence suffisante pour qu'elle soit observable par le conducteur,
c) un flou, engendré par l'apposition de la couche sur le pare-brise, mesuré selon la norme Ansi Z26.1 1996, inférieur à 2% voire même inférieur à 1%,
d) une transmission lumineuse supérieure à 70% et de préférence supérieure à 75%.

En outre, tel qu'illustré par les exemples ci-dessous, les luminophores du type téréphtalate ont montré des propriétés de durabilité au rayonnement UV solaire incident et au rayonnement UV d'excitation, notamment laser, très supérieures aux autres luminophores organiques ou inorganiques.

Le mode de réalisation qui précède n'est bien évidemment en aucune façon limitatif de la présente invention, sous aucun des aspects précédemment décrits.

### Exemples :

Les exemples qui suivent permettent d'illustrer un exemple de réalisation d'un pare-brise feuilleté selon la présente invention et ses avantages:

On a d'abord synthétisé un pare-brise feuilleté selon la présente invention, comprenant la succession de deux feuilles de verre reliées par un feuillet intercalaire de PVB d'épaisseur 760 microns. L'assemblage est réalisé selon les techniques bien connu de l'art.

Préalablement au feuilletage, selon un carré de verre de dimensions d'environ 10 × 10 cm², une couche de luminophore est déposée. Le luminophore est choisi parmi différentes poudres de luminophores bien connus pour absorber fortement dans le domaine des UV, tel que reporté dans le tableau 1 qui suit. Le luminophore est incorporé dans le vitrage par une technique de sérigraphie classique. Le luminophore est déposé sur la face de la feuille de verre intérieure 2, sur la face tournée vers le feuillet PVB avant l'étape d'assemblage (voir figure). Sans sortir du cadre de l'invention, le luminophore peut également être déposé sur la face intérieure du PVB.

Plus précisément, on réalise au préalable une dilution du luminophore dans un liant de type PVB. La dilution est ajustée pour l'obtention finale d'une concentration en luminophore de 1% en masse de pigment par rapport à la masse de liant. En règle générale, le liant contient un diluant à base d'éthanol ou d'autres solvants afin d'optimiser la viscosité pour le dépôt par sérigraphie. Les essais effectués par le demandeur ont montrés qu'il était possible de travailler avec des concentrations allant de 0,1% à 10% en masse de pigment dans un diluant, des concentrations de 0,5 à 5% donnant par ailleurs les meilleurs compromis entre la résultante du flou obtenu et la luminance observée.

Les mélanges sont ensuite sérigraphiés, selon les techniques classiques, sur la feuille de verre. L'épaisseur de la couche initiale déposée par sérigraphie, incorporant le luminophore dans le mélange PVB/éthanol, est d'environ 10 à 40 microns.

On laisse ensuite le solvant s'évaporer puis le feuilletage est réalisé entre les deux feuilles de verre et le feuillet PVB selon les techniques en autoclave classiques dans le domaine. On obtient ainsi un pare-brise tel que décrit sur la figure.

Sur les différents vitrages obtenus, on a mesuré les paramètres caractéristiques de l'application tels décrits précédemment selon les protocoles suivants :

Le flou a été mesuré selon la norme automobile Ansi Z26.1 (1996).

La résistance à la chaleur du vitrage a été réalisée conformément au test décrit dans la norme européenne ECE R43 A3/5.

La durabilité aux rayonnements UV solaires incidents a été mesurée par le test Arizona ® qui consiste à exposer le vitrage à une radiation émise par une lampe à arc au Xénon pour simuler le rayonnement solaire selon la norme ISO 4892 (partie 2) à une température de 90°C. Une telle exposition permet un vieillissement accéléré du luminophore. La mesure du temps nécessaire pour que la luminance initiale soit réduite de moitié permet d'estimer et de comparer directement et simplement les propriétés de durabilité des différents luminophores testés sous le rayonnement solaire.

La coloration du vitrage a été mesurée par le test dit « Yellowness Index » selon la norme DIN 6167, après 400 heures d'exposition du vitrage au test Arizona précédemment décrit.

La durabilité à un rayonnement laser UV d'excitation a été mesurée selon la méthode suivante :

On a dirigé un faisceau laser d'intensité de puissance 200 mW et de longueur d'onde égale à 405 nm directement sur la partie du vitrage comprenant la couche de luminophore, sur une surface d'environ 2 mm². Un luminance-mètre est dirigée vers le spot de lumière émis et on mesure en continu la luminance en cd/m².

On mesure ainsi :
- la luminance monochromatique initiale du rayonnement d'émission, une luminance monochromatique de l'ordre de plusieurs centaines de cd/m² étant jugée suffisante pour que le spot soit parfaitement visible du conducteur regardant la route dans des conditions normales d'ensoleillement, tel que décrit précédemment,
- la longueur d'onde maximale du rayonnement émis et la couleur observée par le conducteur du véhicule, par exemple,
- le temps nécessaire pour que la luminance initiale soit réduite de moitié, cette valeur caractérisant selon l'invention la durabilité du luminophore sous le rayonnement concentré incident.

L'éclairement en continu d'un spot de petite taille et immobile conduit à une dégradation rapide du luminophore et donc à une diminution rapide de sa luminance. Cette méthode sévère permet d'obtenir un vieillissement accéléré du luminophore, tout en conservant la longueur d'onde du faisceau excitateur final, mais est très éloigné des conditions normales d'utilisation, pour lesquelles la durée de vie du luminophore sera bien évidemment beaucoup plus longue. Le but d'un tel vieillissement accéléré est ainsi d'obtenir une discrimination rapide des luminophores dans l'application recherchée.

L'ensemble des résultats observés sont reportés dans le tableau 1 :

**Tableau 1**

| Nature du luminophore | BAM (minéral)* | Lum 1 (Red) :** Eu(TPBDTFA)₃Phen | Lum 2 : β-quinophtalone | Lum 3 : Naphtalimide***. | Lum 4 : Diéthyl (2-5 dihydroxy) téréphtalate |
|---|---|---|---|---|---|
| Index de jaunissement (DIN 6167) après 400h | - | Jaunissement | Pas de jaunissement | Jaunissement | Pas de jaunissement |
| Résistance à la chaleur (ECE R43 A3/5) | - | Non conforme (jaunissement) | conforme | conforme | conforme |
| Flou (haze) (%) (Ansi Z26.1 (1996)) | > 5 | 0,80 | 0,47 | 0,70 | 0,79 |
| Durabilité sous rayonnement UV (Arizona) | - | 15 heures | 27 heures | 1600 heures | 1600 heures |
| λ maximale d'émission (nm) sous faisceau laser (405 nm, 200 mW) | 450 nm | 620 nm | 520 nm | 430 nm | 450 nm |
| Couleur perçue | Bleu | Rouge | Vert | Bleu-violet | Bleu |
| Luminance initiale sous faisceau laser (405 nm, 200 mW) | <30 Cd/m² | > 500 Cd/m² | > 500 Cd/m² | ∼ 1800 Cd/m² | ∼ 4700 Cd/m² |
| Durabilité sous excitation laser (405 nm, 200 mW) | - | 1,5 heures | 15 minutes | 21 heures | 49 heures |

| | | | | | |
|---|---|---|---|---|---|
| * BAM : BaMgAl₁₀O₁₇ : Eu²⁺ ** Eu(TPBDTFA)₃Phen : TPBDTFA = 1-(4'-(5-(4-tert-butylphenyl)-1,3,4-oxadiazol-2- yl)biphenyl-4-yl)-4,4,4-trifluorobutane- 1,3-dione phen = (1,10-phenanthroline) *** 4,5-dimethyloxy-N-(2ethylhexyl) naphtalimide | | | | | |

Les résultats reportés dans le tableau 1 montrent que les luminophores inorganiques ne permettent pas d'obtenir des substrats suffisamment transparents pour l'application, le flou étant supérieur à 5 % pour tous les essais effectués, alors que la luminance est très inférieure à celle observée pour les luminophores organiques.

Parmi les luminophores organiques, on voit que les luminophores conventionnellement connus pour leur forte luminescence sous excitation UV présentent des durabilités extrêmement faibles sous un faisceau d'excitation concentré du type Laser ou plus radicalement sous des conditions d'ensoleillement classiques. Le luminophore selon l'invention, du type hydroxytéréphtalate, présente les meilleures propriétés de durabilité, permettant d'envisager des applications du type HUD, sous un faisceau incident concentré, notamment laser.

## Revendications

1. Vitrage feuilleté pour la visualisation d'informations du type pare-brise pour automobile ou vitrage pour bâtiment, comprenant un assemblage d'au moins deux feuilles transparentes de verre inorganique ou d'une matière organique résistante, reliées entre elles par un intercalaire d'une matière thermoformable ou par des feuillets multicouches incorporant un tel intercalaire, ledit vitrage étant caractérisé en qu'un matériau luminophore du type hydroxytéréphtalate est intégré dans ledit intercalaire, permettant ladite visualisation.

2. Vitrage feuilleté selon la revendication 1, dans lequel ledit luminophore est un hydroxyalkyltéréphtalate R-OOC-Φ(OH)ₓ-COOR, de formule développée : 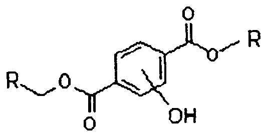 dans laquelle Φ désigne un noyau benzénique substitué par au moins un groupement hydroxy (OH), R est une chaine hydrocarbonée comprenant de 1 à 10 atomes et x est égal à 1 ou 2.

3. Vitrage feuilleté selon l'une des revendications 1 ou 2, dans lequel au moins un groupement hydroxy est en position 2 et/ou en position 5 sur le noyau benzénique.

4. Vitrage feuilleté selon l'une des revendications précédentes, dans lequel ledit luminophore est un dialkyl 2-5 dihydroxytéréphtalate répondant à la formule développée :

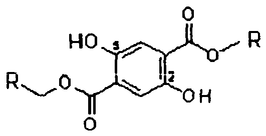

5. Vitrage feuilleté selon l'une des revendications précédentes, dans lequel ledit luminophore est le diéthyl-2,5-dihydroxytéréphtalate.

6. Vitrage feuilleté selon l'une des revendications précédentes, dans lequel ledit luminophore est solvaté dans ladite matière thermoplastique.

7. Vitrage feuilleté selon l'une des revendications précédentes, dans lequel la matière thermoformable constituant ledit intercalaire est choisie dans le groupe des PVB, des PVC plastifiés, du polyuréthane PU ou des éthylène vinyle acétate EVA.

8. Vitrage feuilleté selon l'une des revendications précédentes, dans lequel la matière thermoformable est le PVB.

9. Vitrage feuilleté selon l'une des revendications précédentes, dans lequel les feuilles transparentes sont reliées entre elles par un feuillet multicouche intégrant un intercalaire PVB, par exemple un feuillet comprenant une succession de couches PVB/PET/PVB, dans lequel PET est le polyéthylène téréphtalate.

10. Dispositif de visualisation d'une image sur un vitrage transparent, comprenant un vitrage feuilleté selon l'une des revendications 1 à 9 et une source génératrice de rayonnement UV concentré du type laser dont le rayonnement est compris entre 350 et 410 nm, le rayonnement UV étant dirigé vers la ou les zones du vitrage comprenant la couche de luminophore du type hydroxytéréphtalate.

11. Dispositif de visualisation selon la revendication 10, dans lequel la source génératrice de rayonnement UV comprend au-moins une diode laser. émettant un rayonnement d'excitation UV dont la longueur d'onde est inférieure à 410 nm et de préférence est comprise entre 350 et 405 nm.

12. Dispositif de visualisation selon l'une des revendications 10 ou 11, dans lequel la puissance surfacique du faisceau issu de la source génératrice est supérieure à 120 mW.cm⁻² et de préférence comprise entre 200 mW.cm⁻² et 20 000 mW.cm⁻².

13. Dispositif de visualisation selon l'une des revendications 10 à 12 comprenant en outre des moyens de modulation de la puissance la source génératrice de rayonnement UV afin d'adapter la luminance aux conditions d'éclairage extérieur de jour du vitrage.

## Claims

1. Laminated glazing for information display, of the automobile windshield or architectural glazing type, comprising an assembly of at least two transparent sheets of inorganic glass or of a strong organic material, joined together by an interlayer of a thermoformable material or by multilayer foils incorporating such an interlayer, said glazing being **characterized in that** a luminophore material of the hydroxyterephthalate type is integrated into said interlayer, allowing said display.

2. The laminated glazing as claimed in claim 1, in which said luminophore is a hydroxyalkylterephthalate R-OOC-Φ(OH)ₓ-COOR, of developed formula: 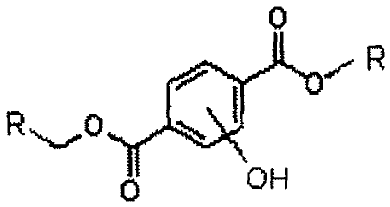 in which Φ denotes a benzene ring substituted with at least one hydroxyl (OH) group, R is a hydrocarbon chain comprising 1 to 10 carbon atoms and x is equal to 1 or 2.

3. The laminated glazing as claimed in either of claims 1 and 2, in which at least one hydroxyl group is in the 2 position and/or the 5 position on the benzene ring.

4. The laminated glazing as claimed in one of the preceding claims, in which said luminophore is a dialkyl-2,5-dihydroxyterephthalate satisfying the developed formula:

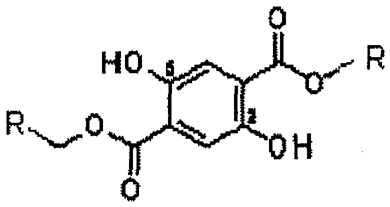

5. The laminated glazing as claimed in one of the preceding claims, in which said luminophore is diethyl-2,5-dihydroxyterephthalate.

6. The laminated glazing as claimed in one of the preceding claims, in which said luminophore is solvated in said thermoplastic material.

7. The laminated glazing as claimed in one of the preceding claims, in which the thermoformable material constituting said interlayer is chosen from the group consisting of PVBs, plasticized PVCs, polyurethane (PU) and ethylene-vinyl acetates (EVAs).

8. The laminated glazing as claimed in one of the preceding claims, in which the thermoformable material is PVB.

9. The laminated glazing as claimed in one of the preceding claims, in which the transparent sheets are joined together by a multilayer foil incorporating a PVB interlayer, for example a foil comprising a succession of PVB/PET/PVB layers, in which PET is polyethylene terephthalate.

10. A device for displaying an image on transparent glazing, comprising laminated glazing as claimed in one of claims 1 to 9 and a source generating concentrated UV radiation of the laser type, the radiation of which is between 350 and 410 nm, the UV radiation being directed onto the area or areas of the glazing comprising the hydroxyterephthalate-type luminophore layer.

11. The display device as claimed in claim 10, in which the source generating UV radiation comprises at least one laser diode emitting UV excitation radiation, the wavelength of which is less than 410 nm and preferably is between 350 and 405 nm.

12. The display device as claimed in either of claims 10 and 11, in which the power per unit area of the beam output by the generating source is greater than 120 mW/cm² and preferably between 200 mW/cm² and 20 000 mW/cm².

13. The display device as claimed in one of claims 10 to 12, which further comprises means for modulating the power of the source generating UV radiation so as to adapt the luminance to the external daylight conditions of the glazing.

## Patentansprüche

1. Verbundverglasung für die Anzeige von Informationen, vom Typ Windschutzscheibe für Kraftfahrzeuge oder Verglasung für Gebäude, umfassend eine Anordnung aus wenigstens zwei transparenten Scheiben aus anorganischem Glas oder aus einem widerstandsfähigen organischen Material, die durch eine Zwischenschicht aus einem thermoformbaren Material oder durch Mehrlagenschichten, die eine solche Zwischenschicht enthalten, untereinander verbunden sind, wobei die Verglasung **dadurch gekennzeichnet ist, dass** ein Luminophor vom Typ Hydroxyterephthalat, der das Anzeigen ermöglicht, in die Zwischenschicht integriert ist.

2. Verbundverglasung nach Anspruch 1, wobei der Luminophor ein Hydroxyalkylterephthalat R-OOC-Φ(OH)ₓ-COOR mit der Strukturformel 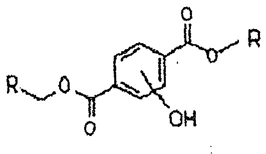 ist, worin Φ einen Benzolkern, der durch wenigstens eine Hydroxygruppe (OH) substituiert ist, bezeichnet, R eine Kohlenwasserstoffkette mit 1 bis 10 Atomen ist und x gleich, 1 oder 2 ist.

3. Verbundverglasung nach einem der Ansprüche 1 oder 2, wobei wenigstens eine Hydroxygruppe in 2-Stellung und/oder in 5-Stellung an dem Benzolkern ist.

4. Verbundverglasung nach einem der vorstehenden Ansprüche, wobei der Luminophor ein Dialky-2-5-dihydroxyterephthalat ist, das der Strukturformel 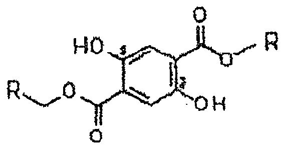 gerecht wird.

5. Verbundverglasung nach einem der vorstehenden Ansprüche, wobei der Luminophor Diethyl-2,5-dihydroxyterephthalat ist.

6. Verbundverglasung nach einem der vorstehenden Ansprüche, wobei der Luminophor in dem thermoplastischen Material solvatisiert ist.

7. Verbundverglasung nach einem der vorstehenden Ansprüche, wobei das thermoformbare Material, welches die Zwischenschicht bildet, aus der Gruppe der PVB, der Weich-PVC, des Polyurethan PU oder der Ethylen-Vinylacetate EVA ausgewählt ist.

8. Verbundverglasung nach einem der vorstehenden Ansprüche, wobei das thermoformbare Material PVB ist.

9. Verbundverglasung nach einem der vorstehenden Ansprüche, wobei die transparenten Scheiben durch eine eine PVB-Zwischenschicht integrierende Mehrlagenschicht, beispielsweise eine Schicht, die eine PVB/PET/PVB-Lagenfolge umfasst, worin PET Polyethylenterephthalat ist, untereinander verbunden sind.

10. Vorrichtung zum Anzeigen eines Bildes auf einer transparenten Verglasung, umfassend eine Verbundverglasung nach einem der Ansprüche 1 bis 9 sowie eine konzentrierte UV-Strahlung erzeugende Quelle vom Typ Laser, dessen Strahlung im Bereich zwischen 350 und 410 nm liegt, wobei die UV-Strahlung in Richtung des oder der Bereiche der Verglasung, welche die Schicht aus Luminophor vom Typ Hydroxyterephthalat umfassend, gerichtet ist.

11. Anzeigevorrichtung nach Anspruch 10, wobei die UV-Strahlung erzeugende Quelle wenigstens eine Laserdiode umfasst, die eine UV-Anregungsstrahlung aussendet, deren Wellenlänge unter 410 nm und vorzugsweise im Bereich zwischen 350 und 405 nm liegt.

12. Anzeigevorrichtung nach einem der Ansprüche 10 oder 11, wobei die Flächenleistung des aus der erzeugenden Quelle austretenden Strahls über 120 mW•cm⁻² und vorzugsweise im Bereich zwischen 200 mW•cm⁻² und 20.000 mW•cm⁻² liegt.

13. Anzeigevorrichtung nach einem der Ansprüche 10 bis 12, ferner umfassend Mittel zum Modulieren der Leistung der UV-Strahlung erzeugenden Quelle, um die Leuchtdichte den Bedingungen einer Tagesaußenbeleuchtung der Verglasung anzupassen.
